# EUROPEAN PATENT APPLICATION

(11) **EP 1 358 785 A1**
(43) Date of publication of application: **05.11.2003**
(21) Application number: 03076193.6
(22) Date of filing: 24.04.2003
(51) Int. Cl.: A01D 34/17

(54) **Mowing device with reduced maintenance and improved cutting efficiency**

(30) Priority: 29.04.2002 IT MI20020911
(71) Applicant: BCS S.p.A., 20121 Milan (IT)
(72) Inventor: Castoldi, Fabrizio, 20145 Milan (IT)
(74) Representative: De Gregori, Antonella

(57) **Abstract**

A mowing device with reduced maintenance and improved cutting efficiency, which combines shearing and scissors effect cutting methods, comprises, fitted to a supporting bar (17), a comb (13) with teeth (14) sliding longitudinally and a mowing blade (15) provided with knives (16) and sliding longitudinally and overlying the comb (13), provided with opposed reciprocating motion, also comprising elastic blade hold-down devices (35) acting on the upper surface of the knives (16), positioned at intervals on the bar (10), suitable to produce automatic adjustment of the gaps between teeth (14) and knives (16), constituted by a plate or spring (36) connected at one end to the supporting bar (17) by securing means (38) and exerting pressure at the free end in proximity to the center of the knife (16) underneath.

## Description

The present invention relates to a mowing device with reduced maintenance and improved cutting efficiency, which may be fitted to power mowers or to mowers of any type.

In conventional mowers the mowing bars with reciprocal movement may be divided into three categories: toothed bars, bars without teeth and coated bars.

In a first conventional mowing bar a plurality of teeth, bolted to a steel bar, form an assembly known as comb which is normally mounted integral with the frame of the mower and which has the function of dividing the grass or other vegetation to be mowed and of providing a support for the mowing blade.

The blade is constituted by a plurality of knives, of triangular or trapezoidal shape with sharpened edges on the lower surface, fitted to a rod, and which rest sliding with reciprocal motion on the upper surface of the teeth.

The teeth also carry a tang directed rearwardly and upwardly for the purpose of counteracting the blade to maintain the blades of grass straight during cutting.

Teeth of this type are known as open anti-clog teeth because the blades of grass drawn between the rear of the blade and the tang are readily expelled rearwards and therefore cannot cause clogging, that is cannot jam blade and teeth.

Conventional mowers however have the serious drawback that, as the comb is fixed, in the case of grass flattened or tangled by rain and wind, the teeth of the comb have difficulty in penetrating the grass to be cut which is instead easily pushed forward to accumulate on the tip of the comb teeth, jamming the comb and requiring momentary machine stoppages for the necessary comb cleaning.

Toothed bars cut the grass by "shearing", or by counteraction, that is the blade of grass rests on the edge of the tooth and of the tang and is cut by the blade. With this cutting method pressure between the blade and underlying cutting part of the tooth is unnecessary.

The blade hold-down devices, the main function of which is to prevent the blade from lifting, are therefore generally constituted by lengths of shaped plates with a box construction, and provided with an edge which presses the knives of the blade against the teeth of the comb, leaving a gap of even a few tenths between the cutting parts.

Cutting bars without teeth, constituted by two blades which move with reciprocal motion in opposite directions acting like "scissors" and clamping the blade of grass between the lower blade and the upper blade, are another known solution to produce dynamic balancing of the mowing device and to simultaneously solve the problem of jamming and clogging.

The two blades, which are substantially the same and clamped to each other by suitable means, are operated by connecting rod-crank kinematic mechanisms or the like to produce opposing oscillations.

With this cutting method the pressure between the two blades is fundamental as the gap between the cutting edges must be eliminated. In fact, if there is a gap, as the tang acting as a support is not present, the blade of grass could bend and become positioned between the cutting edges resulting in an extremely poor quality of cut.

These devices therefore do not always ensure an acceptable cut, as when for example the cutting edge of the two blades becomes rounded through wear or when the means which clamp them together loosen, the grass bends between the two blades and is torn rather than cut.

For this reason the blade hold-down devices used are shaped so as to exert pressure in the center of the blade, to thus hold the cutting surfaces close to each other.

Lastly, so-called coated bars are known, consisting of devices with a blade and counter-blade in which blade and counter-blade are operated by connecting rod-crank kinematic mechanisms or the like, which produce opposed oscillating motion of the same amplitude. Moreover, while the blade has the normal structure with flat, triangular or trapezoidal knives, the counter-blade is constituted by two elements parallel and facing each other which produce slots inside which the knives of the blade travel like a guillotine.

The lower element of the counter-blade is sharpened to produce, in cooperation with the knives, the cutting action, while the other element merely counteracts to maintain the blades of grass straight during cutting, which is performed by "shearing" in the same manner as the toothed bar.

The coated bars do not become jammed, as the tips of the counter-blade have a wide oscillating movement, producing a good cut even if the knives are badly sharpened and even if there is a small amount of gap between the sharpened parts of the blade and of the counter-blade. Nonetheless, there is the serious drawback of clogging the mowing system, which translates into a pressure that may be strong enough to deform the elements of the counter-blade.

In this case, the purpose of the blade hold-down devices is to prevent the coating from opening, damaging the system.

Lastly, a particular type of toothed bar has been developed, which as such cuts the grass by "shearing", in which the comb is also provided with reciprocal motion, opposed to the reciprocal motion of the blade.

This device is not subject to clogging, as it is substantially shaped like a toothed bar. Moreover, it is not subject to jamming, as the oscillations to which the comb is subjected prevent grass from accumulating on the teeth.

Nonetheless there are some types of grass, such as goatgrass with extremely thin and strong blades found particularly in mountainous areas, or "creeping grasses" on which, owing to their characteristics, a high quality cut is difficult to attain as they tend to penetrate any gaps remaining between blade and tooth.

The gap between blade and tooth increases owing to wear of the sliding parts and in order to maintain a more or less constant quality of cut this must be progressively adjusted using the fixed blade hold-down devices.

It is useful to remember that at least a part of the maintenance of mowing devices, such as adjusting gaps or replacing a damaged blade is in most cases performed directly by the operator during brief stops in mowing operations and therefore without the use of specific tools or sophisticated measurement instruments.

The need to perform complicated operations implies extended machine idle times and there is also the risk of injury to the operator or damage to the mowing device.

Moreover, if the parts are not adjusted optimally this causes poor cutting quality and greater wear of the mowing bar.

As a result, although solving the majority of problems of clogging, jamming and vibration, not even toothed bars with dual opposed motion are able to ensure an excellent quality of cut with any type of grass, or to ensure rapid and simple maintenance.

The object of the present invention is to produce a mowing device with reduced maintenance and improved cutting efficiency which obviates all the drawbacks and ensures all the aforesaid advantages.

Another object of the present invention is to produce a mowing device which minimizes the forces involved in transmitting motion to the cutting parts, is provided with maximum solidity and results in minimum power absorption.

A further object of the invention is to provide a mowing device which ensures regular and reliable operation and minimizes maintenance operations.

Yet another object of the present invention is to produce a particularly simple and functional mowing device, with moderate costs.

These objects according to the present invention are attained by producing a mowing device with reduced maintenance and improved cutting efficiency as set forth in claim 1.

Further characteristics are provided for in the dependent claims.

The characteristics and advantages of a mowing device according to the present invention will become more apparent from the following description, provided purely as a non-limiting example, with reference to the attached schematic drawings, in which:
figure 1 is a plan view of a detail of a mowing device with reduced maintenance and improved cutting efficiency, forming the object of the present invention;
figure 2 is a perspective view of the mowing device in figure 1, fitted to a power mower;
figure 3 shows a detail of the mowing bar in figure 1, wherein components on different planes have been partially removed;
figures 4 and 5 are transverse sections of the device in figure 1, produced respectively according to the traces IV-IV and V-V.

With reference to the figures, a mowing device with reduced maintenance and improved cutting efficiency is shown, indicated as a whole with 10, for example fitted centrally to a power mower with frontal cut.

This configuration is described purely as a non-limiting example, as the device of the present invention may also be connected to mowers suitable to be towed or carried by an agricultural vehicle and operated by a power take-off of this vehicle.

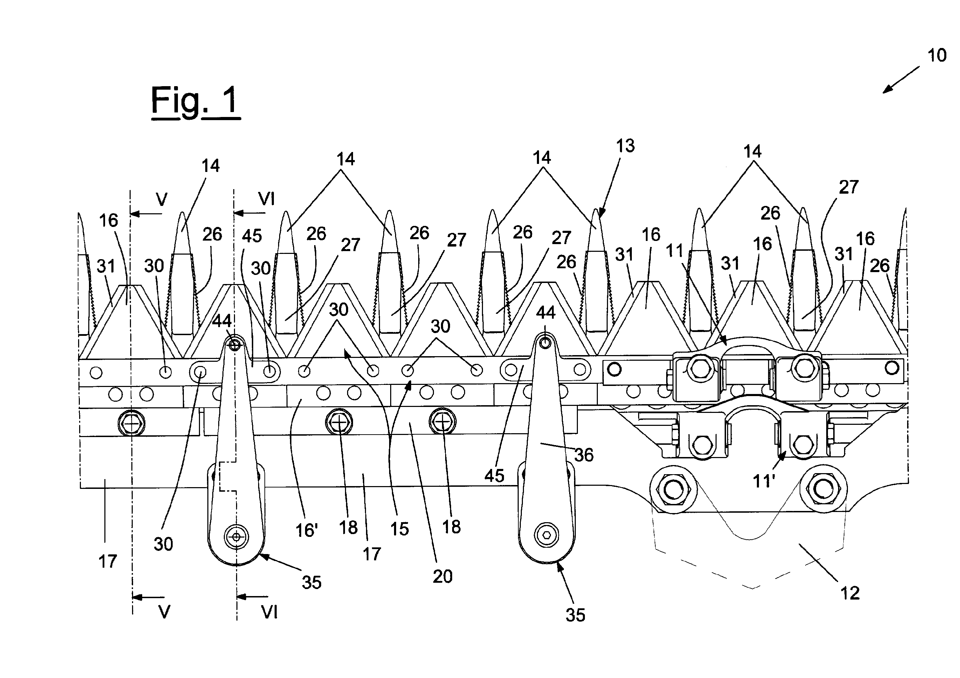

The mowing device or a mowing bar 10, generally secured rigidly to a frame, not shown, by means of a support 12, represented schematically in figure 1, comprises in combination a comb 13 provided with teeth 14 and a mowing blade 15 provided with knives 16 both sliding longitudinally with opposed reciprocal motion of appropriate amplitude.

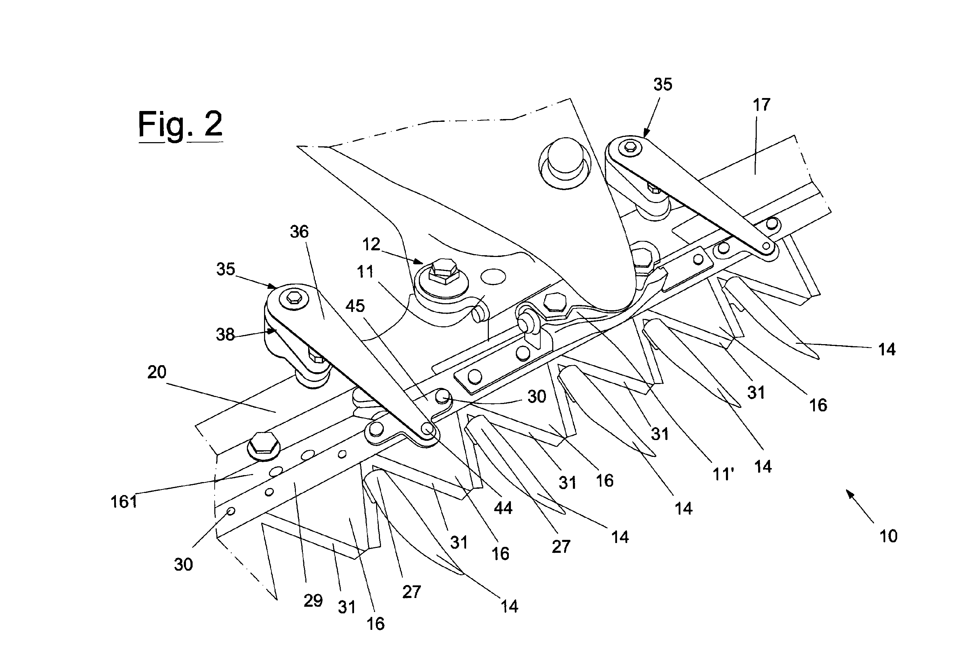

In fact, the comb 13 and the blade 15 are connected to control means, not shown, for example constituted by connecting rod-crank kinematic mechanisms or toothed gearings, by means of the couplings 11 and 11', for example fitted in a central position (figures 1 and 2).

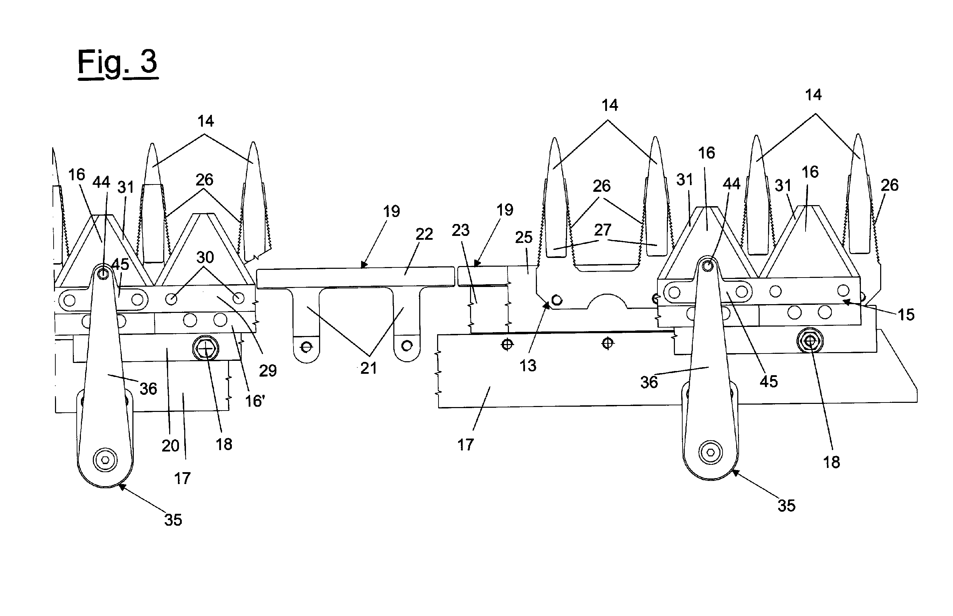

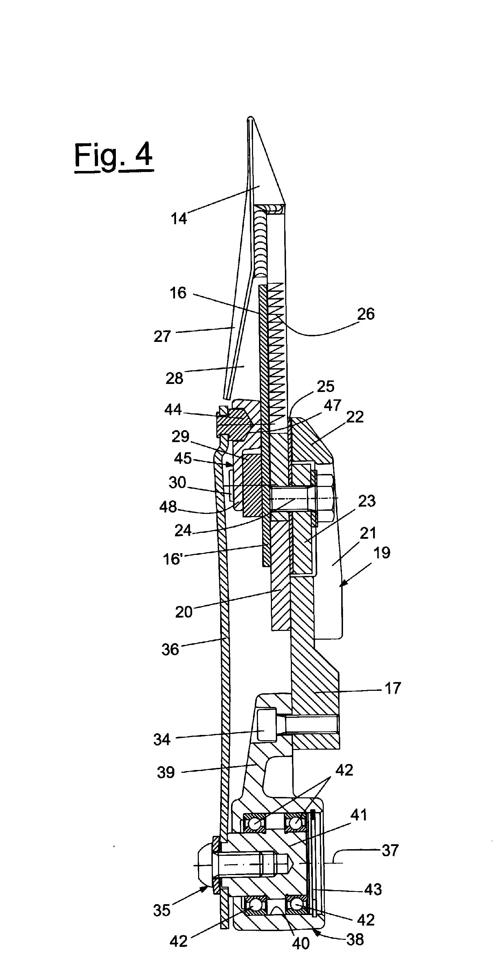

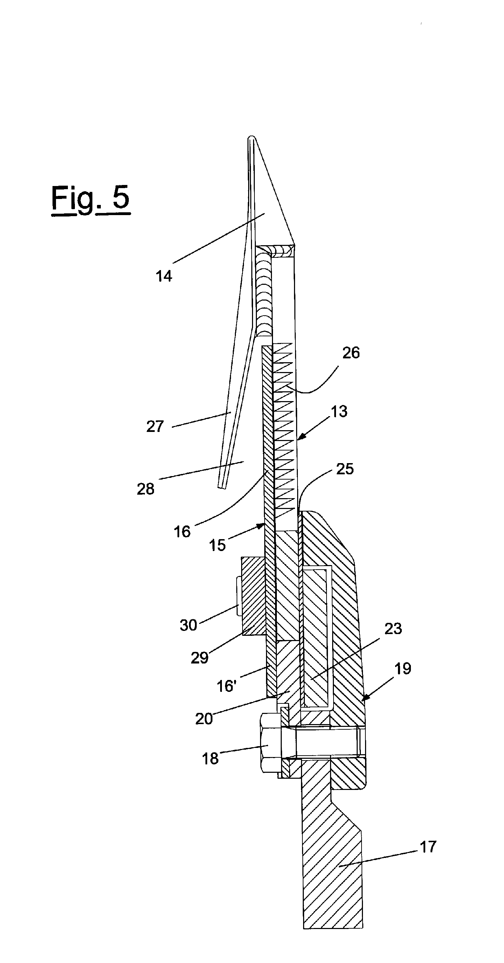

Lower guide means 19 for the comb 13 and upper guide means 20 on which the blade 15 rests and which simultaneously also constitute a guide for the rear edge of the teeth 14 of the comb 13, are fixed to a supporting bar 17, as shown in figure 3, by engaging means 18, such as screws or bolts (figure 4 and 5).

The upper guide means 20 are for example constituted by four lengths of rod, which in the central part of the bar 10 are replaced by the plate for connection to the comb 11, as shown in figure 1.

The lower guide means 19, shown in a plan view in figure 3, are provided with one or more supporting arms 21 and with a frontal guide edge 22. A base rod 23 of the comb, to which pairs of teeth 14 are connected through engaging means 24, such as screws, is carried by the supporting arms 21.

In an alternative embodiment, not shown, the lower guide means 19 may be produced in the form of a rod extending along the entire length of the bar, for example provided with slots to house the head of the screws 24 and allow longitudinal sliding movement integral with the comb.

A wear-resistant plate 25 fitted over the base rod of the comb 23 and projecting frontwardly in relation to the latter is interposed between the base of the teeth 14 and the frontal guide edge 22 of the lower guide means 19, this too being held in place by the screws 24.

The teeth 14 are triangular in shape, or more precisely more or less trapezoidal, with knurled sides 26. Their exact profile, however, may be varied as desired, although always, in general, elongated and tapering towards the front.

In the example of embodiment shown, they are provided with tangs 27, provided by welding, which bend rearwardly and upwardly, forming with the remaining parts of the device an empty space 28 with wedge section, open rearwardly in order to allow grass or other material to be delivered from the space easily (figure 4 and 5).

Differently to those shown, the tangs 27 may for example be in one piece with the tooth 14, be rounded in shape, be made of a material other than metal, or be produced according to other structures known in the art.

The mowing blade 15 comprises a base rod 29, fixed to which by means of screws or nails 30 are the knives 16 provided with downwardly facing tapered wedged-shaped edges, forming cutting edges 31, which slide on the upper face of the teeth 14.

The knives 16 of substantially trapezoidal shape, are provided with a substantially rectangular rear supporting portion 16', which is positioned over the upper guide means 20.

Moving elastic blade hold-down devices 35 of the finger type are secured to the supporting bar 17, for example by engaging means 34, such as screws. These devices exert pressure on the blade 15, eliminating gaps between blade 15 and comb 13, notwithstanding the degree of wear of the parts.

Each blade hold-down device 35 is constituted by an elastic plate 36, or spring, secured at one end to the supporting bar 17 by securing means which allow rotation around a vertical axis 37 and, at the free end, exert pressure in proximity to the center of the knife 16 underneath.

The blade hold-down devices 35 may not act on each knife, but may be fitted to the supporting bar 17 at appropriate intervals, in order to obtain sufficient pressure on the blade 15 as a function of the loads envisaged during operation.

The securing means comprise a bushing support 38 provided with a connection arm 39, bolted to the supporting bar 17, and provided with a substantially cylindrical housing 40 which houses a pin 41, to which the plate 36 is secured. The pin 41, revolving around the axis 37 is for example mounted on ball bearings 42 and, for example, held in position by an elastic ring 43.

In a preferred embodiment proposed, the free end of the spring 36 is provided with a ferrule element 44, fitted to it or produced in one piece with it.

The ferrule element 44 may exert pressure on the blade 15 acting directly on the upper surface of the knife 16 or engaging with a pressure element 45 interposed and integral with the blade 15.

The pressure elements 45 are provided with a seat 47 to house a part of the ferrule 44, and are also provided with a block 48 for fixing to the base rod of the blade 29, for example by means of the nails 30.

The pressure elements 45 draw the front end of the spring 36 during reciprocal motion of the blade 15, causing an oscillating movement of the blade hold-down device 35.

The pressure exerted by the blade hold-down devices 35 in proximity to the center of the blade 15 is adjustable and is maintained constant with wear of the sliding parts, performing progressive automatic adjustment of the gaps between knives 16 and teeth 14.

The position of the center of gravity, necessarily located behind the tang 27 to avoid interference between parts during relative motion, is not perfectly centered in relation to the cutting zone, but is nonetheless positioned sufficiently forwards to produce the scissors effect.

In particular, the presence of the rear supporting portion 16' of the knives 16 ensures good stability to the blade 15 counteracting the tendency for its tip to become raised.

A mowing device according to the present invention has thus been produced, constituted by a toothed bar with dual movement, therefore cutting by "shearing", to which a partial "scissors" effect has been added.

The moving elastic blade hold-down devices 35 also allow easy maintenance of the mowing bars 10 with dual movement. In fact, simply by lifting the spring 36, overcoming the elastic pressure force, and rotating it by an angle sufficing to disengage it from the mowing bar 10, the blade can slide freely in relation to the comb, for example in order to replace it.

The opposed reciprocal motion of blade and comb is transferred by control means, neither shown nor described as they may be produced according to any embodiment known to those skilled in the art, through the two couplings 11 and 11'. In the embodiment proposed purely as an example, the couplings 11 and 11' are fitted centrally on the mowing bar, respectively to the base rod of the comb 23 and to the base rod of the blade 29.

The mowing device with reduced maintenance and improved cutting efficiency of the present invention draws an advantage from the combination of the two cutting methods, "shearing" and "scissors effect", respectively increasing the advantages and minimizing the drawbacks.

In fact, the device makes it possible to obtain a high quality cut even in the presence of particularly difficult grasses such as goatgrass and creeping grasses, which cannot be attained using known toothed bars. Unlike the case of conventional bars which cut only by "scissors effect" and require constant maintenance, these excellent cutting results are also attained when they are not perfectly sharp.

The device according to the present invention advantageously makes it possible to attain a noteworthy decrease in the wear of moving parts.

This is partly due to the fact that it is possible to maintain correct adjustment of the pressure of the blade hold-down device through time, unlike the situation frequently occurring in manually clamped rigid blade hold-down devices.

In fact, the moving elastic blade hold-down device has the elastic characteristics of a highly flexible spring which maintains the pressure between blade and tooth constant and controlled, and adjusted in order to minimize wear caused by sliding of moving parts.

Moreover, the phenomenon of grass becoming positioned between blade and tooth, which not only causes a bad cut but also a sort of wedge effect tending to move the surfaces away from each other, is considerably reduced preventing the loads even of considerable extent from being transmitted to the securing means, causing greater wear.

By combining the two types of cut, "shearing" and "scissors effect" it is possible to considerably decrease the frequency of the strokes, even by up to 40%, with consequent further reduction in wear and consequently in maintenance operations, in particular when the mowing bar is made to advance at moderate speed.

In fact, a lower impact speed causes a decrease in the "shearing" effect, without diminishing the cutting quality thanks to the added "scissors effect".

The mowing device with reduced maintenance and improved cutting efficiency, thus conceived, is susceptible to numerous modifications and variants, all coming within the scope of the invention; moreover, all parts may be replaced with technically equivalent elements. In practice, the materials used and their dimensions may be any according to technical requirements.

## Claims

1. Mowing device with reduced maintenance and improved cutting efficiency, comprising, fitted to a supporting bar (17), a comb (13) with teeth (14) sliding longitudinally and a mowing blade (15) provided with knives (16) and sliding longitudinally and overlying said comb (13), said comb (13) and blade (15) being provided with opposed reciprocating motion, and also comprising blade hold-down devices (35) acting on the upper surface of the knives (16), **characterized in that** it comprises elastic blade hold-down devices (35), positioned at intervals on said bar (10), suitable to produce automatic adjustment of the gaps between teeth (14) and knives (16), constituted by a plate or spring (36) connected at one end of said supporting bar (17) by securing means (38) and exerting pressure at the free end in proximity to the center of the knife (16) underneath, said mowing device (10) combining the cutting methods by shearing, following counteraction of the blade of grass against said teeth (14) and by scissors effect, subsequent to pressure between said knives (16) and said teeth (14).

2. Device as claimed in claim 1, **characterized in that** said elastic blade hold-down devices (35) are secured, free to rotate (in 37) to said securing means (38).

3. Device as claimed in claim 2, **characterized in that** said securing means comprise a bushing support (38) provided with a connection arm (39), secured to the supporting bar (17), and provided with a housing (40) which houses a pin (41), rotating around said axis (37) to which said flat spring (36) is secured.

4. Device as claimed in claim 3, **characterized in that** said pin (41) is mounted on ball bearings (42).

5. Device as claimed in claim 3, **characterized in that** said pin (41) is held in position inside said support (38) by an elastic ring (43).

6. Device as claimed in claim 2, **characterized in that** said elastic blade hold-down devices (35) are secured to a vertical axis (37).

7. Device as claimed in claim 1, **characterized in that** said free end of the spring (36) is provided with a ferrule element (44).

8. Device as claimed in claim 7, **characterized in that** said ferrule element (44) engages in a seat (47) of a pressure element (45), integral with said blade (15) and interposed between said ferrule (44) and said knife (16).

9. Device as claimed in claim 1, **characterized in that** said knives (16) are provided with wedge-shaped tapered edges forming cutting edges (31), which slide on the upper face of said teeth (14).

10. Device as claimed in claim 1, **characterized in that** said knives (16) are provided with a rear supporting portion (16').

11. Device as claimed in claim 1, **characterized in that** said teeth (14) of the comb (13) are provided with tangs (27) facing rearwardly and upwardly.

12. Device as claimed in claim 11, **characterized in that** said tangs (27) determine with the respective tooth a wedge-shaped space (28) inside which the respective knife (16) of the blade (15) penetrates.

13. Device as claimed in claim 11, **characterized in that** said tangs (31) are fixed to said teeth (14) by welding.

14. Device as claimed in claim 1, **characterized in that** said supporting bar (17) is rigidly connected to the frame of the mowing machine.

15. Device as claimed in claim 1, **characterized in that** said mowing blade (15) comprises a base rod (29) to which said knives (16) are fixed.

16. Device as claimed in claim 1, **characterized in that** said comb (13) comprises a base rod (23) to which said teeth (14) are fixed.

17. Device as claimed in claim 1, **characterized in that** lower guide means (19) for said comb (13) and upper guide means (20) on which said blade (15) rests and which simultaneously also constitute a guide for the rear edge of the teeth (14) of the comb (13), are fixed to said supporting bar (17) by engaging means (18).

18. Device as claimed in claim 17, **characterized in that** said lower guide means (19) on which said comb (13) is carried are provided with at least a supporting arm (21) and with a frontal guide edge (22).

19. Device as claimed in claim 18, **characterized in that** a wear-resistant plate (25) is interposed between the base of the teeth (14) and said frontal guide edge (22) of the lower guide means (19).
